# EUROPÄISCHE PATENTSCHRIFT

(11) **EP 3 647 010 B1**
(45) Veröffentlichungstag und Bekanntmachung des Hinweises auf die Patenterteilung: **03.03.2021**
(21) Anmeldenummer: 18203245.8
(22) Anmeldetag: 30.10.2018
(51) Int. Cl.: B28B 3/02, A01K 1/015, B28B 7/18, B28B 23/00, E04C 2/42

(54) **VERFAHREN ZUR HERSTELLUNG EINES STALLBODENELEMENTS**
METHOD FOR THE PRODUCTION OF A STALL FLOOR ELEMENT
PROCÉDÉ DE FABRICATION D'UN ÉLÉMENT DE SOL D'ÉTABLE

(43) Veröffentlichungstag der Anmeldung: 06.05.2020
(73) Patentinhaber: Betonwerk Schwarz GmbH, 84513 Töging am Inn (DE)
(72) Erfinder: Schwarz, Rudolf, 84543 Winhöring (DE)
(74) Vertreter: Lambacher, Michael

(56) Entgegenhaltungen:
- EP-A1- 2 138 289
- EP-A1- 2 181 585
- EP-A2- 2 742 798

## Beschreibung

Die Erfindung betrifft Stallbodenelemente für Tierställe. Konkret wird ein Verfahren zum Herstellen eines Stallbodenelements beschrieben.

### Hintergrund

Vorgefertigte Stallbodenelemente aus Beton, die in einem Tierstall (zum Beispiel Stall für Kühe) zur Erzeugung eines Bodens ausgelegt werden, sind hinreichend bekannt. Derartige Stallbodenelemente bestehen in der Regel aus zwei oder mehreren voneinander beabstandeten und in einer Ebene angeordneten Längsbalken, sowie zwei oder mehreren voneinander beabstandeten und in der Ebene der Längsbalken angeordneten Querbalken. Durch jeweils zwei benachbarte Längsbalken und Querbalken wird ein Längsspalt definiert, welcher zur Entsorgung von Tierkot und Tierurin vorgesehen ist. Aufgrund der in den Stallbodenelementen ausgebildeten Längsspalten werden derartige Elemente auch Längsspaltenrostelemente genannt.

Stallbodenelemente aus reinem Beton weisen einige Nachteile auf. Beispielsweise ist bekannt, dass Betonoberflächen durch Ansammlung von Kot und Urin glitschig werden können. Die Tiere können ausrutschen und sich verletzen. Um die Bodengriffigkeit zu verbessern, wurde beispielsweise in der EP 1 563 728 B1 ein Verfahren zur Herstellung von vorgefertigten Längsspaltenrostelementen vorgeschlagen, bei dem auf der Betonoberfläche der Längsspaltenrostelemente Rillen eingeschnitten oder eingefräst werden. Die Strukturierung der Betonoberfläche ermöglicht einen besseren Halt der Tiere.

Ein weiterer Nachteil besteht darin, dass Betonoberflächen schnell altern. Es ist bekannt, dass Tierurin Beton zersetzen kann und somit den Alterungsprozess beschleunigt. Um die Betonoberflächen zu schützen, wird in der EP 2 936 977 B1 ein Stallbodenelement vorgeschlagen, bei dem die Oberflächen der Längsbalken (und Querbalken) durch elastische Schutzelemente geschützt werden. Die elastischen Schutzelemente schützen den Betonkern der Balkenelemente (also Längsbalken, Querbalken) vor dem Eindringen von Urin und Mist. Die gerillt ausgebildete Oberfläche der Schutzelemente ermöglicht ferner ein schnelles Trennen von Urin und Mist, wodurch die Bodengriffigkeit verbessert wird. Zudem erhöhen die elastischen Schutzelemente den Komfort für Tiere.

Um ein Verrutschen der elastischen Schutzelemente gegenüber den Balkenelementen aus Beton zu verhindern, schlägt die EP 2 936 977 B1 folgende Technik vor. Jedes elastische Schutzelement wird mit wenigstens einem Durchbruch versehen. Ferner werden die darunterliegenden Balkenelemente aus Beton an entsprechender Stelle mit Betonklötzen versehen, welche gerade die Form der Aussparungen der elastischen Schutzelemente aufweisen. Die Betonklötze werden an der Betonoberfläche der Balkenelemente befestigt (z.B. verklebt oder verschraubt). Die elastischen Schutzelemente werden entlang der Spaltenelemente des Stallbodenelements verlegt, wobei die Betonklötze der Spaltenelemente in die Durchbrüche der Schutzelemente formschlüssig eingreifen. Es entsteht so ein Stallbodenelement mit einer Oberfläche, die aus den elastischen Schutzelementen und den Betonklötzen besteht.

Ein Nachteil der beschriebenen Technik besteht in der Herstellung der Bodenelemente. Die nachträgliche Aufbringung der separat ausgebildeten Betonklötze entlang der Spaltenelemente ist aufwändig und arbeitsintensiv. Es hat sich ferner gezeigt, dass sich aufgrund der hohen Belastung der Böden die aufgebrachten Betonklötze von den darunterliegenden Balkenelementen aus Beton lösen können. Dies gilt insbesondere dann, wenn die Betonklötze mit der darunterliegenden Kernstruktur verklebt sind

EP 2 138 289 A1 offenbart ein Verfahren zur Herstellung eines Längsspaltenrostelements, das mehrere im Abstand zueinander in einer Ebene angeordnete Längsbalken und mehrere im Abstand zueinander in der Ebene der Längsbalken angeordnete Querbalken aufweist, wobei das Verfahren folgende Schritte umfasst:
(a) Bereitstellen einer Gussform, wobei die Gussform nach oben offene Gussräume aufweist, welche die Form der wenigstens zwei voneinander beabstandet angeordneten Längsbalken des Stallbodenelements vorgibt;
(b) Füllen der offenen Gussräume mit Beton bis zu einer vorgegebenen Füllhöhe zur Formung der Betonkerne der wenigstens zwei Längsbalken;
(c) Auflegen von Gummibelägen an der Oberfläche der jeweiligen Betonkerne;
(d) Eindrücken der an der Oberfläche aufgelegten Gummibeläge in die jeweiligen Betonkerne, bis eine gewünschte Gesamthöhe des Stallbodenelements erreicht wird.

Aufgabe der Erfindung ist es, eine Herstellungstechnik bereitzustellen, welche die in Zusammenhang mit der EP 2 936 977 B1 beschriebenen Nachteile beseitigt.

### Kurzer Abriss

Zur Lösung der obengenannten Aufgaben sowie weiterer Aufgaben wird gemäß einem ersten Aspekt ein Verfahren zum Herstellen eines Stallbodenelements bereitgestellt, wobei das Stallbodenelement wenigstens zwei voneinander beabstandete und in einer Ebene angeordnete Längsbalken aufweist, die jeweils einen Betonkern und wenigstens einen den Betonkern zumindest teilweise bedeckenden Gummibelag aufweisen, wobei benachbarte Längsbalken des Stallbodenelements jeweils durch einen Längsspalt voneinander getrennt sind. Das Verfahren umfasst die folgenden Schritte: Bereitstellen einer Gussform, wobei die Gussform nach oben offene Gussräume aufweist, welche die Form der wenigstens zwei voneinander beabstandet angeordneten Längsbalken des Stallbodenelements vorgibt; Füllen der offenen Gussräume mit Beton bis zu einer vorgegebenen Füllhöhe zur Formung der Betonkerne der wenigstens zwei Längsbalken; Auflegen von Gummibelägen an der Oberfläche der jeweiligen Betonkerne, wobei jeder Gummibelag wenigstens einen Durchbruch aufweist, in die Beton der darunterliegenden Betonkerne eindringen kann; Eindrücken der an der Oberfläche aufgelegten Gummibeläge in die jeweiligen Betonkerne, bis eine gewünschte Gesamthöhe des Stallbodenelements erreicht wird, wobei das durch den Eindrückvorgang verdrängte Betonvolumen der darunterliegenden Betonkerne in die jeweiligen Durchbrüche eindringt und diese ausfüllt; Entfernen von an den Oberflächen der Durchbrüche austretendem überschüssigem Beton; und Glattstreichen des Betons an der Oberfläche der Durchbrüche derart, dass ein Stallbodenelement mit einer einheitlichen Oberfläche entsteht.

Die Schritte des Bereitstellens einer Gussform, des Füllens der offenen Gussräume der Gussform, des Auflegens von Gummibelägen an der Oberfläche der jeweiligen Betonkerne, des Eindrückens der an der Oberfläche aufgelegten Gummibeläge, des Entfernens von an den Oberflächen der Durchbrüche austretendem überschüssigem Beton sowie des Glattstreichens des Betons an der Oberfläche der Durchbrüche kann durchgeführt werden, während der Beton in der Gussform frisch ist. Mit frischem Beton oder Frischbeton kann ein Beton im erdfeuchten Zustand gemeint sein. Überschüssiger Frischbeton kann somit beim Eindrücken der Gummibeläge in die darüberliegenden Durchbrüche der aufgelegten Gummibeläge eindringen und diese vollständig ausfüllen. Um dem Beton eine bessere Formbarkeit zu geben, kann der Frischbeton mit Kunststofffasern vermischt sein.

Die Höhe (bzw. Dicke) des Stallbodenelements setzt sich aus der Höhe (Dicke) der jeweiligen Betonkerne der Längsbalken und der Höhe (Dicke) der verwendeten Gummibeläge zusammen. Die Füllhöhe des Frischbetons kann in Abhängigkeit der Höhe der Gummibeläge derart gewählt werden, dass bei eingedrückten Gummibelägen jeder Durchbruch der Gummibeläge vollständig mit Beton ausgefüllt ist und die gewünschte Höhe (Gesamthöhe) des Stallbodenelements erreicht wird. Die Füllhöhe für die Gussräume wird somit entsprechend dem beim Eindrückvorgang verdrängten Betonvolumen höher gewählt als die tatsächliche Höhe der Betonkerne.

Zur besseren Verteilung des in der Gussform eingefüllten Betons kann die Gussform auf einer Rüttelvorrichtung bereitgestellt werden. Ferner kann die Gussform mit Hilfe der Rüttelvorrichtung während des Füllens der offenen Gussräume gerüttelt werden, so dass sich der Beton in kurzer Zeit gleichmäßig über die gesamte Gussform verteilt.

Die an den Betonoberflächen aufgelegten Gummibeläge können während des Eindrückvorgangs mit einem vorgegebenen (konstanten oder linear ansteigenden) Druck beaufschlagt werden. Der angelegte Druck bewirkt, dass der darunterliegende Frischbeton verdrängt wird und in die Durchbrüche der Gummibeläge eindringt. Dieser druckbeaufschlagte Eindrückvorgang kann zusätzlich zur homogenen Verteilung und Verdichtung des darunterliegenden Frischbetons in der Gussform dienen. Insbesondere kann der oben beschriebene Rüttelvorgang auch während des Eindrückvorgangs durchgeführt werden, um den Eindrückvorgang und die Betonverteilung (auch innerhalb der Durchbrüche) zu verbessern.

Das Verfahren kann ferner den Schritt des Lösens des Stallbodenelements von der Gussform umfassen. Das Lösen des Stallbodenelements von der Gussform kann hierbei die folgenden Unterschritte umfassen: Drehen der Gussform derart, dass die freiliegende Oberfläche des Stallbodenelements nach unten zeigt, und anschließendes Entschalen des Stallbodenelements nach unten aus der Gussform. Die Entschalung des Stallbodenelements kann erfolgen, solange der Beton des Stallbodenelements (also der Betonkerne) noch nicht ausgehärtet ist (also sich noch im erdfeuchten Zustand befindet). Im Anschluss an die Entschalung kann die Aushärtung der Betonkerne erfolgen. Die Aushärtung der Betonkerne kann bei eingedrückten Gummibelägen erfolgen.

Die Gummibeläge können derart dimensioniert sein, dass deren Breite im Wesentlichen der Breite der abzudeckenden Betonkerne der Längsbalken entspricht. Ferner können die Gummibeläge in Längsrichtung der Längsbalken derart dimensioniert sein, dass sie nur einen Teil oder die gesamte Länge der Längsbalken abdecken. Decken die Gummibeläge nur einen Teil der Längsbalken ab, so können die Gummibeläge in Längsrichtung der Längsbalken derart aufgelegt sein, dass benachbarte Gummibeläge in Längsrichtung zueinander bündig angeordnet sind. Auf diese Weise wird bewirkt, dass durch die aufgelegten Gummibeläge eine plane Gummioberfläche entsteht, die lediglich durch den in den Durchbrüchen aufgenommenen Beton unterbrochen ist.

Die Oberfläche der einzudrückenden Gummibeläge kann profiliert sein. Das Profil der Gummibeläge kann Längs- und/oder Querrillen zur Abführung von Urin in die benachbarten Spalten des Stallbodenelements umfassen. Die Rückseite der Gummibeläge (also die Seite der Gummibeläge, welche dem Beton zugewandt ist) kann glatt oder profiliert ausgebildet sein. Durch eine profilierte Ausbildung kann eine zusätzliche mechanische Verankerung der Gummibeläge mit dem darunterliegenden Beton erreicht werden. Auf diese Weise kann sichergestellt werden, dass die Gummibeläge sich nicht vom darunterliegenden Betonkern lösen können. Dadurch wird die mechanische Stabilität der Gummibeläge weiter verbessert. Allerdings können dadurch die Gummibeläge nicht manuell abgenommen und ausgetauscht werden. Gemäß einer alternativen Variante ist auch denkbar, dass die Rückseite glatt ausgebildet ist. In diesem Fall können die Gummibeläge nach Teilaushärtung oder vollständiger Aushärtung des Betons wieder abgenommen werden und bei Bedarf (nach längerer Zeit und Abnutzung) durch neue Gummibeläge ausgetauscht werden.

Das Stallbodenelement kann ferner wenigstens zwei voneinander beabstandet angeordnete und die wenigstens zwei Längsbalken kreuzende Querbalken aufweisen. Die Querbalken können ebenso mit Gummibelägen bedeckt sein wie die Längsbalken. Hierbei kann dasselbe Verfahren angewendet werden wie oben im Zusammenhang mit der Erzeugung der Längsbalken beschrieben wurde. Das heißt, es kann eine Gussform bereitgestellt werden, welche die Form der Querbalken zusammen mit der Form der Längsbalken vorgibt. Anschließend werden die offenen Gussräume der Gussform mit Beton gefüllt, bis eine vorgegebene Füllhöhe erreicht ist. Im Anschluss werden Gummibeläge nicht nur entlang der Längsbalken sondern auch entlang der Querbalken aufgelegt und eingedrückt, wie oben beschrieben. Im Anschluss werden die an den Durchbrüchen austretenden Betonüberschüsse entfernt und der Beton an den Durchbrüchen glatt gestrichen, so dass eine einheitliche Oberfläche entsteht.

Mit einheitlicher Oberfläche ist gemeint, dass die glattgestrichene Betonoberfläche des in den Durchbrüchen eingedrungenen Betons bündig zur Oberfläche der Gummibeläge ist. Die so entstandene Bodenoberfläche ist an den Übergängen zwischen Gummibelägen und mit Beton gefüllten Durchbrüchen glatt und weist keine Stufen (Erhöhungen oder Vertiefungen) auf.

Gemäß einem weiteren Aspekt wird ein Stallbodenelement bereitgestellt, das wenigstens zwei voneinander beabstandete und in einer Ebene angeordnete Längsbalken aufweist, die jeweils einen Betonkern und den Betonkern zumindest teilweise bedeckende Gummibeläge aufweisen, wobei benachbarte Längsbalken des Stallbodenelements jeweils durch einen Längsspalt voneinander getrennt sind. Das Stallbodenelement wird gemäß dem oben beschriebenen Verfahren hergestellt.

Die Oberfläche der Gummibeläge kann ein vorgegebenes Oberflächenprofil (Rillen) aufweisen. Ferner kann die dem Beton zugewandte Eindrückfläche der Gummibeläge glatt oder profiliert ausgebildet sein.

Das Stallbodenelement kann ferner wenigstens zwei voneinander beabstandet angeordnete und die wenigstens zwei Längsbalken kreuzende Querbalken aufweisen. Die Querbalken können ebenso mit Gummibelägen bedeckt sein wie die Längsbalken. Hierbei kann dasselbe Verfahren angewendet werden wie oben im Zusammenhang mit der Erzeugung der Längsbalken beschrieben wurde.

### Kurze Beschreibung der Zeichnungen

Anhand von Zeichnungen werden Aspekte der vorliegenden Erfindung weiter erläutert. Es zeigen:
- Figuren 1a/1b: Darstellungen eines Stallbodenelements gemäß der vorliegenden Erfindung;
- Figur 2: eine schematische Darstellung einer Vorrichtung zur Herstellung eines Stallbodenelements gemäß der vorliegenden Erfindung;
- Figur 3: ein Flussdiagramm eines Verfahrens zum Herstellen eines Stallbodenelements gemäß der vorliegenden Erfindung;
- Figuren 4a-4c: schematische Darstellungen, welche die Durchführung des Verfahrens mit der Vorrichtung gemäß Figur 2 in unterschiedlichen Verfahrensschritten zeigen.

### Detaillierte Beschreibung

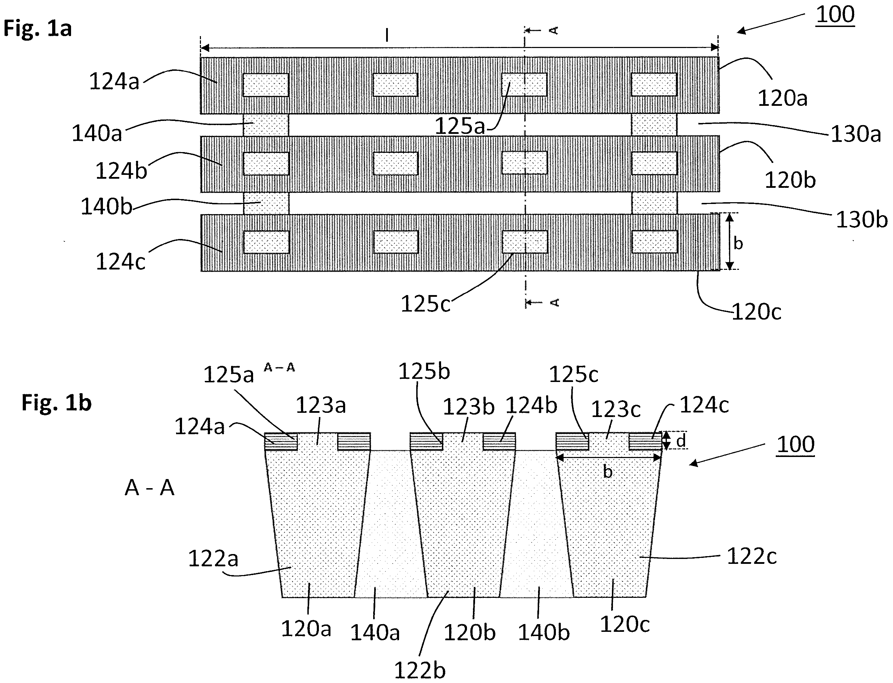

In den Figuren 1a und 1b wird zunächst ein Stallbodenelement 100 gemäß der vorliegenden Erfindung beschrieben. Figur 1a zeigt eine Draufsicht auf das Stallbodenelement 100, wie es zur Herstellung eines Stallbodens eingesetzt werden kann. Figur 1b zeigt eine Querschnittsansicht des Stallbodenelements 100 entlang der Linie A-A in Figur 1a.

Das Stallbodenelement 100 umfasst mehrere Längsbalken 120a, 120b, 120c, die durch Längsspalten 130a, 130b voneinander getrennt sind. In der in Figur 1a gezeigten schematischen Darstellung umfasst das Stallbodenelement 100 drei Längsbalken 120a, 120b, 120c, die jeweils voneinander durch einen Längsspalt 130, 130b getrennt sind. Es versteht sich, dass die Darstellung exemplarisch ist und das Stallbodenelement 100 auch nur zwei Längsbalken oder mehr als drei Längsbalken aufweisen kann. Die vorliegende Erfindung hängt nicht von der Anzahl der Längsbalken 120a, 120b, 120c ab. Wie ferner aus der Figur 1a zu entnehmen ist, umfasst das Stallbodenelement 100 mehrere Querbalken 140a, 140b. Die Querbalken 140a, 140b stellen eine mechanische Verbindung zwischen den Längsbalken 120a, 120b, 120c dar, welche durch Längsspalten 130a, 130b voneinander getrennt sind.

Der strukturelle Aufbau des Stallbodenelements 100 wird in Zusammenhang mit der Figur 1b weiter beschrieben. Figur 1b zeigt eine Querschnittsansicht entlang des Querschnitts A-A. Jeder der Längsbalken 120a, 120b, 120c umfasst einen Betonkern 122a, 122b, 122c, welcher an seiner Oberfläche durch entsprechende Gummibeläge 124a, 124b, 124c bedeckt ist. Mit anderen Worten besteht jeder Längsbalken 120a, 120b, 120c aus einem Betonkern 122a, 122b, 122c sowie wenigstens einem an der Oberfläche des Stallbodenelements 100 angeordneten und den Betonkern 122a, 122b, 122c bedeckenden Gummibelag 124a, 124b, 124c.

Der Betonkern 122a, 122b, 122c eines jeden Längsbalkens 120a, 120b, 120c weist in der in Figur 1b gezeigten Ausführung des Stallbodenelements 100 einen trapezförmigen Querschnitt auf. Ausgehend von der Oberfläche des Stallbodenelements 100 verjüngt sich der Querschnitt des Betonkerns 122a, 122b, 122 eines jeden Längsbalkens 120a, 120b, 120c zur Rückseite des Stallbodenelements 100 hin. Dementsprechend nimmt die Breite der die Längsbalken 120a, 120b, 120c trennenden Längsspalten 130a, 130b zur Rückseite des Stallbodenelements 100 hin zu. Die Aufweitung der Längsspalten 130a, 130b ermöglicht eine reibungslose Abführung von Mist und Urin über die Längsspalten 130a, 130b. Es versteht sich, dass die Längsbalken 120a, 120b, 120c des Stallbodenelements 100 auch eine andere Querschnittsform aufweisen können, die von der hier beschriebene trapezförmigen Querschnittsform abweicht.

Der Betonkern 122a, 122b, 122c eines jeden Längsbalkens 120a, 120b, 120c kann aus herkömmlichem Beton oder Betongemisch aufgebaut sein. Alternativ kann faserverstärkter Beton eingesetzt werden. Die Beimischung von Fasern (z.B. Kunststofffasern) im Frischbeton kann dessen Konsistenz und Formbarkeit verbessern, so dass Betonkerne 122a, 122b, 122c mit klaren Begrenzungen realisierbar/formbar sind.

Die an der Oberfläche des Stallbodenelements 100 angeordneten und die Längsbalken 120a, 120b, 120c bedeckenden Gummibeläge 124a, 124b, 124c sind plattenförmig ausgebildet. Sie weisen eine vorgegebene Breite b, Länge I und Dicke (bzw. Höhe) d auf, wobei die Breite b eines jeden Gummibelags 124a, 124b, 124c im Wesentlichen der Breite der zu bedeckenden Betonkerne 122a, 122b, 122c entspricht. Die Länge I eines jeden Gummibelags 124a, 124b, 124c kann der Länge der Längsbalken 120a, 120b, 120c entsprechen. Die Länge I eines jeden Gummibelags 124a, 124b, 124c kann jedoch auch kürzer als die Länge der Längsbalken 120a, 120b, 120c sein. In diesem Fall werden zur vollständigen Abdeckung eines jeden Längsbalkens 120a, 120b, 120c mehrere Gummibeläge 124a, 124b, 124c in Längsrichtung der Längsbalken bündig aneinandergereiht.

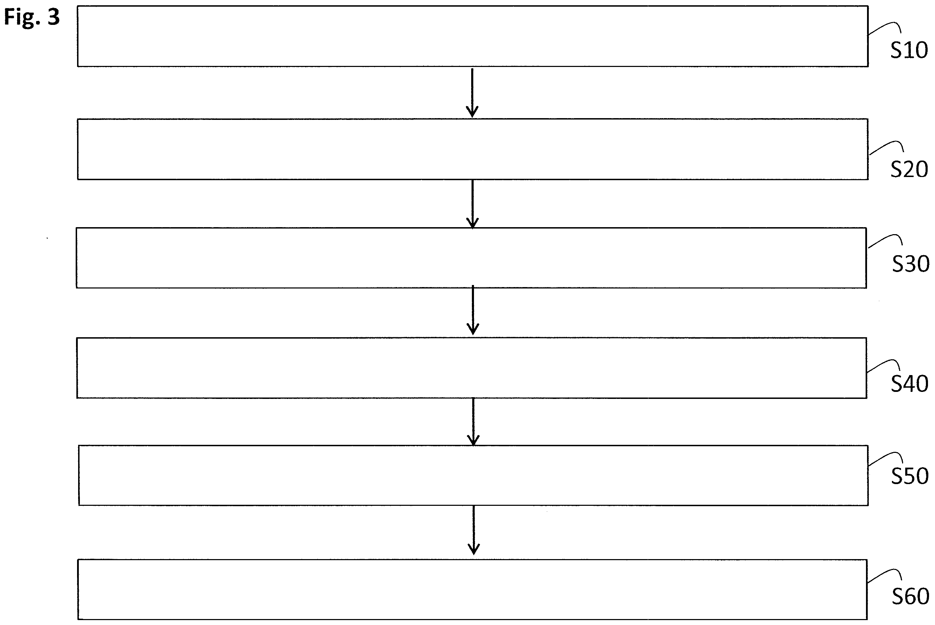

Jeder Gummibelag 124a, 124b, 124c weist ferner wenigstens einen Durchbruch 125a, 125b, 125c auf (siehe auch Figur 1a). Jeder Durchbruch 125a, 125b, 125c ist zur Aufnahme von Beton vorgesehen. Der in jedem Durchbruch 125a, 125b, 125c aufgenommene Beton erzeugt einen Vorsprung 123a, 123b 123c, der von dem jeweiligen Betonkern 122a, 122b, 122 hervorragt. Gemäß der vorliegenden Erfindung sind die Vorsprünge 123a, 123b 123c mit dem darunterliegenden Betonkernen einstückig ausgebildet. Die Vorsprünge 123a, 123b 123c werden durch Eindrücken der Gummibeläge 124a, 124b, 124c in den Frischbeton der Betonkerne 122a, 122b , 122c erzeugt, wie in Zusammenhang mit Figur 3 weiter unten noch näher beschrieben wird.

Ein jeder Vorsprung 123a, 123b, 123c greift (passgenau) in einen korrespondierenden Durchbruch 125a, 125b 125c eines Gummibelags 124a, 124b, 124c ein. Durch den Eingriff der Vorsprünge 123a, 123b, 123c in korrespondierende Durchbrüche 125a, 125b 125c wird ein Verrutschen der Gummibeläge 124a, 124b, 124c in der Ebene und relativ zu den Betonkernen 122a, 122b, 122c verhindert.

Wie ferner aus Figur 1a hervorgeht, kann die den Betonkernen 122a, 122b, 122c abgewandte Oberfläche der Gummibeläge 124a, 124b, 124c eine Struktur aufweisen. Die Struktur kann eine Riffelung umfassen. Die Riffelung kann dazu ausgebildet sein, Urin zügig in Richtung der Längsspalten 130a, 130b abzuführen. Gemäß einer Implementierung kann die Riffelung ein Rillenmuster umfassen, das im Wesentlichen quer zur Längsrichtung der Gummibeläge 124a, 124b, 124c angeordnet ist. Die quer zur Längsrichtung der Rillen angeordneten Gummibeläge 124a, 124b, 124c weisen in Richtung der Längsspalten 140a, 140b. Sie können somit Urin in Richtung der Längsspalten 130a, 130b abführen.

Wie ferner aus Figur 1a hervorgeht, kann die den Betonkernen 122a, 122b, 122c zugewandte Oberfläche der Gummibeläge 124a, 124b, 124c glatt ausgebildet sein (also keine Struktur aufweisen). Durch die glatte Ausbildung können die Gummibeläge 124a, 124b, 124c von der Oberfläche der Betonkerne 122a, 122b, 122c manuell abgelöst werden. Mit anderen Worten stehen die Gummibeläge 124a, 124b, 124c mit der Oberfläche der Betonkerne 122a, 122b, 122c lösbar im Kontakt. Sie sind mit der Oberfläche der Betonkerne 122a, 122b, 122c jedoch nicht fest verbunden. Somit können die Gummibeläge 124a, 124b, 124c bei Abnutzung leicht durch neue Gummibeläge 124a, 124b, 124c ersetzt werden.

Die Querbalken 140a, 140b können im Vergleich zu den Längsbalken 120a, 120b, 120c wesentlich dünner ausgebildet sein. Die Querbalken 140a, 140b können aus (faserverstärktem) Beton bestehen. Insbesondere können die Querbalken 140a, 140b zusammen mit den Betonkernen 122a, 122b, 122c der Längsbalken 120a, 120b, 120c einstückig ausgebildet sein.

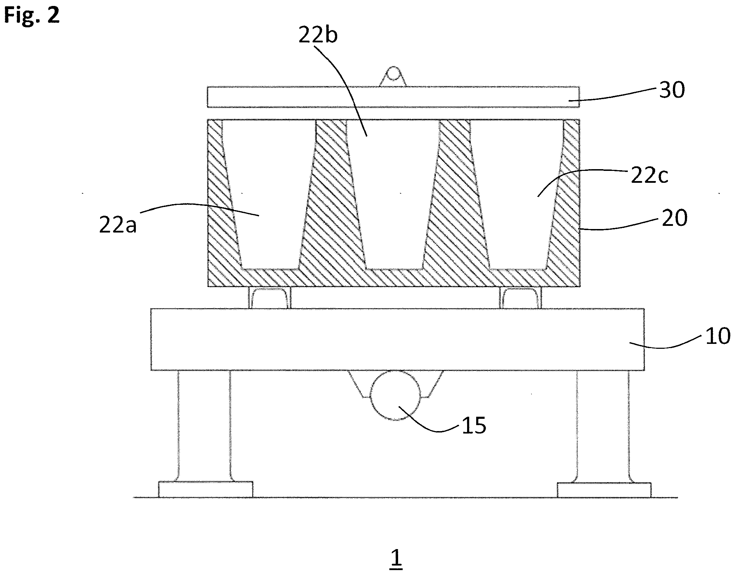

In Zusammenhang mit Figur 2 wird eine Vorrichtung 1 zur Herstellung des in den Figuren 1a und 1b dargestellten Stallbodenelements 100 weiter beschrieben. Die Vorrichtung 1 umfasst einen Rütteltisch 10 mit einem Rüttelmotor 15, eine Gussform 20 sowie eine Druckeinrichtung 30. Der Rüttelmotor 15 ist dazu vorgesehen ist, eine Rüttelbewegung auf den Rütteltisch 10 zu übertragen. Die Gussform 20 weist mehrere Gussräume 22a, 22b, 22c auf, welche zur Aufnahme von Frischbeton vorgesehen sind. Die Gussräume 22a, 22b, 22c bilden die Form der zu erzeugenden Längsbalken 120a, 120b, 120c (und Querbalken 140a, 140b) nach. In dem vorliegenden Fall weisen die Gussräume 22a, 22b, 22c trapezförmige Querschnitte auf, um die im Querschnitt trapezförmig ausgebildeten Längsbalken 120a, 120b, 120c nachzubilden (vgl. Figuren 1a und 1b). Die Gussform 20 ist auf dem Rütteltisch 10 angeordnet und kann durch Betätigung des Rüttelmotors 15 gerüttelt werden. Die Druckeinrichtung 30 ist dazu ausgebildet, die Gummibeläge 124a, 124b, 124c an der Oberseite der Gussräume 22a, 22b, 22c in den in den Gussräumen 22a, 22b, 22c aufgenommenen Frischbeton einzudrücken.

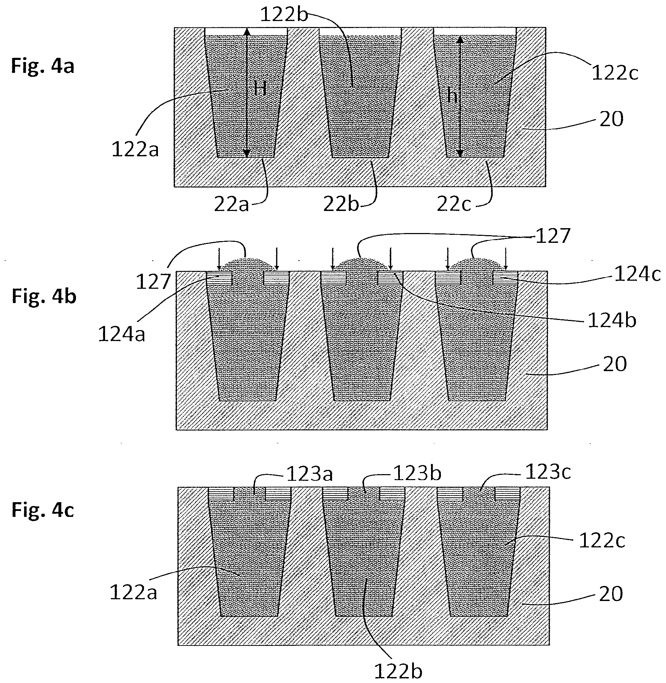

In Zusammenhang mit den Figuren 3 und 4a bis 4c wird nun ein erfindungsgemäßes Verfahren zur Herstellung des Stallbodenelements 100 weiter beschrieben.

In einem ersten Schritt S10 wird die Gussform 20 bereitgestellt (siehe Figur 3). Die Gussform 20 wird hierfür auf dem Rütteltisch 10 angeordnet, welcher dazu vorgesehen ist, eine Rüttelbewegung zu erzeugen. Die Gussform 20 weist nach oben offene Gussräume 22a, 22b, 22c auf, welche die Form der Längsbalken 120a, 120b, 120c haben. Sofern das Stallbodenelement 100 Querbalken 140a, 140b aufweist, kann die Gussform 20 ebenso entsprechende Gussräume für die Querbalken 140a, 140b aufweisen. Diese Gussräume sind in der Abbildung in Figur 2 und Figur 4 nicht dargestellt.

In einem weiteren Schritt S20 werden die offenen Gussräume 22a, 22b, 22c mit Beton (Frischbeton) bis zu einer vorgegebenen Füllhöhe h (siehe Figur 4a, Füllhöhe h) gefüllt. Die Füllhöhe h kann kleiner als die Höhe H der Gussräume 22a, 22b, 22c sein. Die Gussform 20 wird mit Hilfe des Rüttelmotors 15 und des Rütteltischs 10 gerüttelt. Somit entsteht eine gleichmäßige Ausfüllung der Gussformen 22a, 22b, 22c mit Frischbeton. Auf diese Weise werden die Betonkerne 122a, 122b, 122c eines jeden Längsbalkens 120a, 120b, 120c erzeugt.

In einem weiteren Schritt S30 werden an der Oberfläche der jeweiligen Betonkerne 122a, 122b, 122c Gummibeläge 124a, 124b, 124c aufgelegt. Dies geschieht, solange der Beton der Betonkerne 122a, 122b, 122c noch in frischem Zustand ist (also noch nicht ausgehärtet ist). Die Gummibeläge 124a, 124b, 124c weisen entsprechende Durchbrüche 125a, 125b, 125c auf wie oben beschrieben.

In einem weiteren Schritt S40 werden dann mit Hilfe der Druckeinrichtung 30 die aufgelegten Gummibeläge 124a, 124b, 124c an der Oberfläche der jeweiligen Betonkerne 122a, 122b, 122c eingedrückt. Die Gummibeläge 124a, 124b, 124c werden so weit in die Betonkerne 122a, 122b, 122c eingedrückt, bis die gewünschte Gesamthöhe des Stallbodenelements 100 erreicht wird. Der durch den Eindrückvorgang verdrängte Beton (Frischbeton) der jeweiligen Betonkerne 122a, 122b, 122c dringt in die Durchbrüche 125a, 125b, 125c ein und füllt diese aus. Insbesondere kann überschüssiger Beton über die Durchbrüche 125a, 125b, 125c an die Oberfläche gelangen und entweichen (siehe Figur 4b -> überschüssiger Beton 127).

Der an der Oberfläche der Gummibeläge 124a, 124b, 124c austretende überschüssige Beton 127 wird in einem weiteren Schritt S50 entfernt. Ferner wird die Oberfläche an den Durchbrüchen 125a, 125b, 125c glattgestrichen (Schritt S60). Auf diese Weise entsteht eine einheitliche Oberfläche zwischen dem in den Durchbrüchen 125a, 125b, 125c eingedrungenen Beton und der Oberfläche der Gummibeläge 124a, 124b, 124c (siehe Figur 4c).

Das so erzeugte Stallbodenelement 100 befindet sich noch in der Gussform 20 und muss in einem weiteren Schritt von der Gussform 20 gelöst werden. Der Schritt des Lösens des Stallbodenelements 100 von der Gussform 20 kann erfolgen, solange der Beton der Betonkerne 122a, 122b, 122c noch frisch (also noch nicht ausgehärtet) ist. Das Lösen des Stallbodenelements 100 von der Gussform 20 kann hierbei die folgenden Unterschritte umfassen: Drehen der Gussform 20 derart, dass die freiliegende Oberfläche des Stallbodenelements 100 mit seinen Gummibelägen nach unten zeigt. Anschließend kann die Entschalung des Stallbodenelements 100 vorgenommen werden.

Das bisher beschriebene Verfahren zur Herstellung eines Stallbodenelements 100 weist mehrere Vorteile auf. Im Gegensatz zu herkömmlichen Techniken werden die Gummibeläge während der Formung der Betonkerne des Stallbodenelements aufgelegt und eingedrückt. Die Gummibeläge sind somit nicht nur Teil des Stallbodenelements, sondern wirken auch als eine Art Verschalung der Betonkerne des Stallbodenelements. Insbesondere werden durch das Eindrücken der Gummibeläge in den Frischbeton der darunterliegenden Betonkerne Vorsprünge geschaffen, welche passgenau in die Durchbrüche der Gummibeläge hineinragen und im ausgehärteten Zustand diese gegen Verrutschen stabilisieren. Ein nachträgliches Aufbringen der Betonvorsprünge durch Verkleben oder Verschrauben mit den darunterliegenden Betonkernen ist durch das erfindungsgemäße Herstellungsverfahren nicht notwendig. Das erfindungsgemäße Herstellungsverfahren ermöglicht somit im Vergleich zu bekannten Herstellungsverfahren eine schnellere und kostengünstigere Herstellung von Stallbodenelementen.

## Patentansprüche

1. Verfahren zum Herstellen eines Stallbodenelements (100), wobei das Stallbodenelement (100) wenigstens zwei voneinander beabstandete und in einer Ebene angeordnete Längsbalken (120a, 120b, 120c) aufweist, die jeweils einen Betonkern (122a, 122b, 122c) und den Betonkern (122a, 122b, 122c) zumindest teilweise bedeckende Gummibeläge (124a, 124b, 124c) aufweisen, wobei benachbarte Längsbalken (120a, 120b, 120c) des Stallbodenelements (100) jeweils durch einen Längsspalt (130a, 130b) voneinander getrennt sind, wobei das Verfahren folgende Schritte umfasst:
(a) Bereitstellen einer Gussform (20), wobei die Gussform (20) nach oben offene Gussräume (22a, 22b, 22c) aufweist, welche die Form der wenigstens zwei voneinander beabstandet angeordneten Längsbalken (120a, 120b, 120c) des Stallbodenelements (100) vorgibt;
(b) Füllen der offenen Gussräume (22a, 22b, 22c) mit Beton bis zu einer vorgegebenen Füllhöhe zur Formung der Betonkerne (122a, 122b, 122c) der wenigstens zwei Längsbalken (120a, 120b, 120c);
(c) Auflegen von Gummibelägen (124a, 124b, 124c) an der Oberfläche der jeweiligen Betonkerne (122a, 122b, 122c), wobei jeder Gummibelag (124a, 124b, 124c) wenigstens einen Durchbruch (125a, 125b, 125c) aufweist, in die Beton der darunterliegenden Betonkerne (122a, 122b, 122c) eindringen kann;
(d) Eindrücken der an der Oberfläche aufgelegten Gummibeläge (124a, 124b, 124c) in die jeweiligen Betonkerne (122a, 122b, 122c), bis eine gewünschte Gesamthöhe des Stallbodenelements (100) erreicht wird, wobei das durch den Eindrückvorgang verdrängte Betonvolumen der darunterliegenden Betonkerne (122a, 122b, 122c) in die jeweiligen Durchbrüche (125a, 125b, 125c) eindringt und diese ausfüllt;
(e) Entfernen von an den Oberflächen der Durchbrüche (125a, 125b, 125c) austretendem überschüssigem Beton; und
(f) Glattstreichen des Betons an der Oberfläche der Durchbrüche (125a, 125b, 125c) derart, dass ein Stallbodenelement (100) mit einer einheitlichen Oberfläche entsteht.

2. Verfahren nach Anspruch 1, wobei die Schritte (b) bis (f) durchgeführt werden, solange der Beton in der Gussform (20) frisch ist.

3. Verfahren nach Anspruch 1 oder 2, wobei die vorgegebene Füllhöhe des Frischbetons in Abhängigkeit der Dicke der einzudrückenden Gummibeläge (124a, 124b, 124c) derart gewählt wird, dass bei eingedrückten Gummibelägen (124a, 124b, 124c) jeder Durchbruch (125a, 125b, 125c) der Gummibeläge (124a, 124b, 124c) vollständig mit Beton ausgefüllt ist.

4. Verfahren nach einem der vorhergehenden Ansprüche ferner umfassend das Bereitstellen einer Rüttelvorrichtung (10), wobei die Gussform (20) auf einer Rüttelvorrichtung (10) angeordnet wird und während der Durchführung von Schritt (b) und/oder Schritt (d) gerüttelt wird.

5. Verfahren nach einem der vorhergehenden Ansprüche, wobei die Gummibeläge (124a, 124b, 124c) beim Prozessschritt (d) mit einem vorgegeben Druck beaufschlagt werden.

6. Verfahren nach einem der vorhergehenden Ansprüche, ferner umfassend folgenden Verfahrensschritt:
(g) Lösen des Stallbodenelements (100) von der Gussform (20).

7. Verfahren nach Anspruch 6, wobei der Schritt des Lösens umfasst:
Drehen der Gussform (20), so dass die freiliegende Oberfläche des Stallbodenelements (100) nach unten zeigt; und
anschließendes Entschalen des Stallbodenelements (100) nach unten aus der Gussform (20).

8. Verfahren nach einem der vorhergehenden Ansprüche, wobei die Gummibeläge (124a, 124b, 124c) derart dimensioniert sind, dass deren Breite im Wesentlichen der Breite der abzudeckenden Betonkerne (122a, 122b, 122c) der Längsbalken (120a, 120b, 120c) entspricht.

9. Verfahren nach einem der vorhergehenden Ansprüche, wobei die Gummibeläge (124a, 124b, 124c) in Längsrichtung der Längsbalken (120a, 120b, 120c) derart aufgelegt werden, dass benachbarte Gummibeläge (124a, 124b, 124c) in Längsrichtung zueinander bündig angeordnet sind.

10. Verfahren nach einem der vorhergehenden Ansprüche, wobei die eingedrückten Gummibeläge (124a, 124b, 124c) nach der vollständigen Aushärtung der Betonkerne (122a, 122b, 122c) wieder abgenommen werden können.

11. Verfahren nach einem der vorhergehenden Ansprüche, wobei das Stallbodenelement (100) ferner wenigstens zwei voneinander beabstandet angeordnete und die wenigstens zwei Längsbalken (120a, 120b, 120c) kreuzende Querbalken (140a, 140b, 140c) umfasst, wobei die Querbalken (140a, 140b, 140c) mit Gummibelägen (124a, 124b, 124c) bedeckt sein können, und wobei die Querbalken (140a, 140b, 140c) gleichzeitig mit den Längsbalken (120a, 120b, 120c) gemäß dem Verfahren nach einem der Ansprüche 1 bis 12 hergestellt werden.

12. Stallbodenelement (100), umfassend wenigstens zwei voneinander beabstandete und in einer Ebene angeordnete Längsbalken (120a, 120b, 120c), die jeweils einen Betonkern (122a, 122b, 122c) und den Betonkern (122a, 122b, 122c) zumindest teilweise bedeckende Gummibeläge (124a, 124b, 124c) aufweisen, wobei benachbarte Längsbalken (120a, 120b, 120c) des Stallbodenelements (100) jeweils durch einen Längsspalt (130a, 130b) voneinander getrennt sind, **dadurch gekennzeichnet, dass** jeder Gummibelag wenigstens einen Durchbruch aufweist, in dem Beton der darunterliegenden Betonkerne eingefüllt ist, und dass die Betonoberfläche des in dem wenigstens einen Durchbruch eingefüllten Betons bündig zur Oberfläche der Gummibeläge ist.

13. Stallbodenelement (100) nach Anspruch 12, wobei die Oberfläche der Gummibeläge (124a, 124b, 124c) ein vorgegebenes Oberflächenprofil aufweist.

14. Stallbodenelement (100) nach Anspruch 12 oder 13, wobei die dem Beton zugewandte Eindrückfläche glatt oder profiliert ist.

## Claims

1. Method for producing a stable floor element (100), wherein the stable floor element (100) has at least two mutually spaced longitudinal beams (120a, 120b, 120c) arranged in a plane, each of which has a concrete core (122a, 122b, 122c) and rubber coverings (124a, 124b, 124c) at least partially covering the concrete core (122a, 122b, 122c), wherein adjacent longitudinal beams (120a, 120b, 120c) of the stable floor element (100) are each separated from one another by a longitudinal gap (130a, 130b), wherein the method comprises the following steps:
(a) providing a casting mould (20), wherein the casting mould (20) has upwardly open casting chambers (22a, 22b, 22c) and predetermines the shape of the at least two mutually spaced longitudinal beams (120a, 120b, 120c) of the stable floor element (100);
(b) filling the open casting chambers (22a, 22b, 22c) with concrete up to a predetermined filling level in order to form the concrete cores (122a, 122b, 122c) of the at least two longitudinal beams (120a, 120b, 120c);
(c) placing rubber coverings (124a, 124b, 124c) on the surface of the respective concrete cores (122a, 122b, 122c), wherein each rubber covering (124a, 124b, 124c) has at least one opening (125a, 125b, 125c) into which the concrete of the underlying concrete cores (122a, 122b, 122c) can penetrate;
(d) pressing the rubber coverings (124a, 124b, 124c) placed on the surface into the respective concrete cores (122a, 122b, 122c) until a desired overall height of the stable floor element (100) is achieved, wherein the concrete volume of the underlying concrete cores (122a, 122b, 122c)) that is displaced by the pressing process penetrates into the respective openings (125a, 125b, 125c) and fills them;
(e) removing excess concrete emerging from the surfaces of the openings (125a, 125b, 125c); and
(f) smoothing the concrete on the surface of the openings (125a, 125b, 125c) such that a stable floor element (100) having a uniform surface is produced.

2. Method according to claim 1, wherein steps (b) to (f) are carried out while the concrete in the casting mould (20) is fresh.

3. Method according to either claim 1 or claim 2, wherein the predetermined filling level of the fresh concrete is selected depending on the thickness of the rubber coverings (124a, 124b, 124c) to be pressed in, such that, when the rubber coverings (124a, 124b, 124c) are pressed in, each opening (125a, 125b, 125c) in the rubber coverings (124a, 124b, 124c) is completely filled with concrete.

4. Method according to any of the preceding claims, further comprising providing a vibrating device (10), wherein the casting mould (20) is arranged on a vibrating device (10) and is vibrated while step (b) and/or step (d) is/are carried out.

5. Method according to any of the preceding claims, wherein the rubber coverings (124a, 124b, 124c) are subjected to a predetermined pressure in process step (d).

6. Method according to any of the preceding claims, further comprising the following method step:
(g) releasing the stable floor element (100) from the casting mould (20).

7. Method according to claim 6, wherein the releasing step comprises:
rotating the casting mould (20) so that the exposed surface of the stable floor element (100) faces downwards; and
then demoulding the stable floor element (100) downwards out of the casting mould (20).

8. Method according to any of the preceding claims, wherein the rubber coverings (124a, 124b, 124c) are dimensioned such that the width thereof substantially corresponds to the width of the concrete cores (122a, 122b, 122c) of the longitudinal beams (120a, 120b, 120c) that are to be covered.

9. Method according to any of the preceding claims, wherein the rubber coverings (124a, 124b, 124c) are placed in the longitudinal direction of the longitudinal beams (120a, 120b, 120c) such that adjacent rubber coverings (124a, 124b, 124c) are arranged flush with one another in the longitudinal direction.

10. Method according to any of the preceding claims, wherein the pressed-in rubber coverings (124a, 124b, 124c) can be removed again after the concrete cores (122a, 122b, 122c) have completely cured.

11. Method according to any of the preceding claims, wherein the stable floor element (100) further comprises at least two mutually spaced transverse beams (140a, 140b, 140c) crossing the at least two longitudinal beams (120a, 120b, 120c), wherein the transverse beams (140a, 140b, 140c) can be covered with rubber coverings (124a, 124b, 124c), and wherein the transverse beams (140a, 140b, 140c) are produced simultaneously with the longitudinal beams (120a, 120b, 120c) in accordance with the method according to any of claims 1 to 12.

12. Stable floor element (100) comprising at least two mutually spaced longitudinal beams (120a, 120b, 120c) arranged in a plane, each of which has a concrete core (122a, 122b, 122c) and rubber coverings (124a, 124b, 124c) at least partially covering the concrete core (122a, 122b, 122c), with adjacent longitudinal beams (120a, 120b, 120c) of the stable floor element (100) each being separated from one another by a longitudinal gap (130a, 130b), **characterised in that** each rubber covering has at least one opening in which the concrete of the underlying concrete cores is filled, and **in that** the concrete surface of the concrete filled in the at least one opening is flush with the surface of the rubber coverings.

13. Stable floor element (100) according to claim 12, wherein the surface of the rubber coverings (124a, 124b, 124c) has a predetermined surface profile.

14. Stable floor element (100) according to either claim 12 or claim 13, wherein the pressing surface facing the concrete is smooth or profiled.

## Revendications

1. Procédé de fabrication d'un élément de sol d'étable (100), dans lequel l'élément de sol d'étable (100) présente au moins deux poutres longitudinales (120a, 120b, 120c) agencées espacées les unes des autres et dans un plan et présentant respectivement un noyau en béton (122a, 122b, 122c) et des revêtements en caoutchouc (124a, 124b, 124c) recouvrant au moins partiellement le noyau en béton (122a , 122b, 122c), dans lequel des poutres longitudinales (120a, 120b, 120c) contiguës de l'élément de sol d'étable (100) sont séparées les unes des autres respectivement par un espace longitudinal (130a, 130b), dans lequel le procédé comprend les étapes ci-dessous consistant à :
(a) fournir un moule de coulée (20), dans lequel le moule de coulée (20) présente des espaces de coulée (22a, 22b, 22c) ouverts vers le haut qui détermine la forme des au moins deux poutres longitudinales (120a, 120b, 120c), agencées espacées les unes des autres, de l'élément de sol d'étable (100) ;
(b) remplir les espaces de coulée (22a, 22b, 22c) ouverts avec du béton jusqu'à un niveau de remplissage prédéfini afin de former les noyaux en béton (122a, 122b, 122c) des au moins deux poutres longitudinales (120a, 120b, 120c) ;
(c) poser les revêtements en caoutchouc (124a, 124b, 124c) sur la surface des noyaux en béton (122a, 122b, 122c) respectifs, dans lequel chaque revêtement en caoutchouc (124a, 124b, 124c) présente au moins un jour (125a, 125b, 125c) au sein duquel peut pénétrer du béton des noyaux en béton (122a, 122b, 122c) sous-jacents ;
(d) enfoncer le revêtement en caoutchouc (124a, 124b, 124c) placé sur la surface dans les noyaux en béton (122a, 122b, 122c) respectifs jusqu'à ce qu'une hauteur totale souhaitée de l'élément de sol d'étable (100) soit atteinte, dans lequel le volume de béton, déplacé par l'opération d'enfoncement, des noyaux en béton (122a, 122b, 122c) sous-jacents pénètre dans les jours (125a, 125b, 125c) respectifs et les remplit ;
(e) enlever l'excédent de béton apparaissant au niveau des surfaces des jours (125a, 125b, 125c) ; et
(f) lisser le béton au niveau de la surface des jours (125a, 125b, 125c) de manière à obtenir un élément de sol d'étable (100) présentant une surface uniforme.

2. Procédé selon la revendication 1, dans lequel les étapes (b) à (f) sont mises en œuvre pendant que le béton est frais au sein du moule de coulée (20).

3. Procédé selon la revendication 1 ou 2, dans lequel le niveau de remplissage prédéfini du béton frais est choisi en fonction de l'épaisseur des revêtements en caoutchouc (124a, 124b, 124c) à enfoncer, de telle manière que lorsque les revêtements en caoutchouc (124a, 124b, 124c) sont enfoncés, chaque jour (125a, 125b, 125c) des revêtements en caoutchouc (124a, 124b, 124c) est entièrement rempli de béton.

4. Procédé selon l'une quelconque des revendications précédentes, comprenant en outre la fourniture d'un dispositif vibrant (10), dans lequel le moule de coulée (20) est agencé sur un dispositif vibrant (10) et est amené à vibrer pendant la mise en œuvre de l'étape (b) et/ou de l'étape (d).

5. Procédé selon l'une quelconque des revendications précédentes, dans lequel les revêtements en caoutchouc (124a, 124b, 124c) sont soumis à une pression prédéfinie lors de l'étape de procédé (d).

6. Procédé selon l'une quelconque des revendications précédentes, comprenant en outre l'étape de procédé ci-dessous consistant à :
(g) détacher l'élément de sol d'étable (100) du moule de coulée (20).

7. Procédé selon la revendication 6, dans lequel l'étape de détachement comprend les étapes consistant à :
faire tourner le moule de coulée (20), de sorte que la surface exposée de l'élément de sol d'étable (100) soit tournée vers le bas ; et
démouler ensuite l'élément de sol d'étable (100) hors du moule de coulée (20) vers le bas.

8. Procédé selon l'une quelconque des revendications précédentes, dans lequel les revêtements en caoutchouc (124a, 124b, 124c) sont dimensionnés de telle manière que leur largeur correspond essentiellement à la largeur des noyaux en béton (122a, 122b, 122c) des poutres longitudinales (120a, 120b, 120c) qui doivent être recouverts.

9. Procédé selon l'une quelconque des revendications précédentes, dans lequel les revêtements en caoutchouc (124a, 124b, 124c) sont placés dans la direction longitudinale des poutres longitudinales (120a, 120b, 120c) de telle manière que des revêtements en caoutchouc (124a, 124b, 124c) contigus sont agencés à ras les uns des autres dans la direction longitudinale.

10. Procédé selon l'une quelconque des revendications précédentes, dans lequel les revêtements en caoutchouc (124a, 124b, 124c) enfoncés peuvent être à nouveau retirés après que les noyaux en béton (122a, 122b, 122c) ont complètement durci.

11. Procédé selon l'une quelconque des revendications précédentes, dans lequel l'élément de sol d'étable (100) comprend en outre au moins deux poutres transversales (140a, 140b, 140c) agencées espacées les unes des autres et en travers des au moins deux poutres longitudinales (120a, 120b, 120c), dans lequel les poutres transversales (140a, 140b, 140c) peuvent être recouvertes de revêtements en caoutchouc (124a, 124b, 124c), et dans lequel les poutres transversales (140a, 140b, 140c) sont produites en même temps que les poutres longitudinales (120a, 120b, 120c) conformément au procédé selon l'une quelconque des revendications 1 à 12.

12. Élément de sol d'étable (100), comprenant au moins deux poutres longitudinales (120a, 120b, 120c) agencées espacées les unes des autres dans un plan et présentant respectivement un noyau en béton (122a, 122b, 122c) et des revêtements en caoutchouc (124a, 124b, 124c) recouvrant au moins partiellement le noyau en béton (122a, 122b, 122c), dans lequel des poutres longitudinales (120a, 120b, 120c) contiguës de l'élément de sol d'étable (100) sont séparées les unes des autres respectivement par un espace longitudinal (130a, 130b), **caractérisé en ce que** chaque revêtement en caoutchouc présente au moins un jour au sein duquel est introduit du béton des noyaux en béton sous-jacents, et **en ce que** la surface de béton du béton introduit dans le au moins un jour se trouve à ras de la surface du revêtement en caoutchouc.

13. Elément de sol d'étable (100) selon la revendication 12, dans lequel la surface des revêtements en caoutchouc (124a, 124b, 124c) présente un profil de surface prédéfini.

14. Elément de sol d'étable (100) selon la revendication 12 ou 13, dans lequel la surface d'enfoncement tournée vers le béton est lisse ou profilée.
